# EUROPEAN PATENT APPLICATION

(11) **EP 4 760 856 A2**
(43) Date of publication of application: **17.06.2026**
(21) Application number: 25214133.8
(22) Date of filing: 07.11.2025
(51) Int. Cl.: H01M 10/42, H01M 50/242

(54) **BATTERY PACK**

(30) Priority: 16.12.2024 KR 20240187613
(71) Applicant: SAMSUNG SDI CO., LTD., Yongin-si, Gyeonggi-do 17084 (KR)
(72) Inventor: LEE, Munheum, 17084 Giheung-gu, Yongin-si, Gyeonggi-do (KR)
(74) Representative: Gulde & Partner

(57) **Abstract**

A battery pack including a battery cell including an electrode assembly, a molding portion coupled to the battery cell and around the battery cell, a protection circuit module extending along one side of the battery cell in a width direction of the battery cell and connected at the one side, the protection circuit module electrically connected to the electrode assembly, and a buffer portion coupled to the molding portion at another side of the battery cell opposite to the one side, and including an elastically deformable material.

## Description

### BACKGROUND

### 1. Field

Embodiments of the present disclosure relate to a battery pack.

### 2. Description of the Related Art

In general, secondary batteries are batteries capable of being charged and discharged a plurality of times and have recently been used in various technical fields across industries such as electricity, electronics, communications, and computers.

Secondary batteries are widely used as energy sources for mobile electronic devices, such as digital cameras, cellular phones, and/or laptop computers. They are also attracting attention as energy sources for hybrid electric vehicles, which are being proposed as a solution to air pollution caused by existing gasoline and diesel internal combustion engines that use fossil fuels.

Secondary batteries are being studied or pursued to improve performance and stability according their usage patterns and usage amounts. A method of manufacturing a battery pack by electrically connecting a secondary battery to an external protection circuit module (PCM) or by integrating the secondary battery with an external protection structure is being used to prevent or reduce risks, such as overcharging and overcurrent of the secondary battery.

The information described in the Background is only intended to improve understanding of the Background and therefore may include information that does not constitute the prior art.

### SUMMARY

Aspects of one or more embodiments of the present disclosure are directed toward a battery pack in which a buffer portion including an elastically deformable material is coupled to a molding portion and arranged on one side of a battery cell to absorb an impact applied to the battery cell and prevent or reduce physical damage to the battery cell. For example, the present disclosure describes a battery pack that includes a buffer portion made of elastically deformable material. This buffer portion is attached to a molding portion and positioned on one side of the battery cell. Its purpose is to absorb impacts and prevent or reduce physical damage to the battery cell.

Additional aspects will be set forth in part in the description which follows and, in part, will be apparent from the description, or may be learned by practice of the presented embodiments of the disclosure. In addition, the aspects and/or advantages of the present disclosure will be realized through means and/or a (*e.g*., any suitable) combination thereof in the claims.

According to one or more embodiments of the present disclosure, a battery pack includes a battery cell including an electrode assembly, a molding portion coupled to the battery cell and around the battery cell, a protection circuit module extending along one side of the battery cell in a width direction of the battery cell and connected at the one side, the protection circuit module electrically connected to the electrode assembly, and a buffer portion coupled to the molding portion at another side of the battery cell opposite to the one side, the buffer portion including an elastically deformable material. For example, the buffer portion may be arranged at the center of the battery cell along the width direction. This arrangement allows the buffer portion to effectively absorb impacts from the outside, thereby preventing or reducing physical damage to the battery cell. Additionally, the buffer portion may include a contact surface in contact with the battery cell and an inclined surface connected to the contact surface, arranged at a set angle to enhance the impact absorption capability. The protection circuit module, extending along one side of the battery cell, ensures electrical connectivity and further contributes to the overall protection of the battery cell by protecting the battery cell from overcharging and overcurrent. In one or more embodiments, the buffer portion may include an elastically deformable non-Newtonian material.

In one or more embodiments, the buffer portion may be arranged at a center of the another side of the battery cell along the width direction of the battery cell.

In one or more embodiments, the buffer portion may include a buffer body in contact with the battery cell and a protrusion protruding outward.

In one or more embodiments, the molding portion may define an insertion groove portion on one side of the molding portion into which the buffer portion is inserted.

In one or more embodiments, the battery cell may include an electrode tab portion connected to the electrode assembly, the electrode tab portion extending outward from the electrode assembly and in contact with the protection circuit module.

In one or more embodiments, the electrode tab portion may include a first electrode tab and a second electrode tab spaced and/or apart (*e.g*., spaced apart or separated) from the first electrode tab, wherein a contact area between the buffer portion and the battery cell may be relatively large compared to (*e.g*., may be greater than) a contact area between the first electrode tab or the second electrode tab and the protection circuit module.

In one or more embodiments, the battery pack may further include a connecting portion between the battery cell and the protection circuit module and connecting the protection circuit module and the battery cell to each other.

In one or more embodiments, the connecting portion may include a connecting body extending along the width direction of the battery cell and in contact with the battery cell, and a reinforcing portion on one side of the connecting body facing (*e.g*., opposite to) the protection circuit module.

In one or more embodiments, the reinforcing portion may include an elastically deformable material. In one or more embodiments, the reinforcing portion may include an elastically deformable non-Newtonian material.

According to one or more embodiments of the present disclosure, a battery pack includes a battery cell including an electrode assembly, a molding portion coupled to the battery cell and around the battery cell, a protection circuit module extending along one side of the battery cell in a width direction of the battery cell and connected at the one side, the protection circuit module electrically connected to the electrode assembly, and a protecting portion around (*e.g*., surrounding) the protection circuit module, coupled to the molding portion, and including an elastically deformable material. For example, the protecting portion may be designed to absorb impacts and prevent physical damage to the protection circuit module. This arrangement should ensure that the protection circuit module remains securely attached to the battery cell and maintains its electrical connectivity. The elastically deformable material of the protecting portion enhances the durability and stability of the battery pack, providing additional protection against external forces and mechanical stress. In one or more embodiments, the protecting portion may include an elastically deformable non-Newtonian material.

In one or more embodiments, the battery cell may include an electrode tab portion connected to the electrode assembly, the electrode tab portion extending outward from the electrode assembly and in contact with the protection circuit module.

In one or more embodiments, the electrode tab portion may include a first electrode tab and a second electrode tab spaced and/or apart (*e.g*., spaced apart or separated) from the first electrode tab, and the protecting portion may be arranged between the first electrode tab and the second electrode tab.

In one or more embodiments, the battery pack may further include a connecting portion between the battery cell and the protection circuit module and connecting the protection circuit module and the battery cell to each other.

In one or more embodiments, the connecting portion may include a connecting body extending along the width direction of the battery cell and in contact with the battery cell, and a reinforcing portion on one side of the connecting body facing (*e.g*., opposite to) the protection circuit module.

In one or more embodiments, the reinforcing portion may include an elastically deformable material.

In one or more embodiments, the reinforcing portion may be provided as a plurality of reinforcing portions and may be on each of opposite end portions of the connecting body.

### BRIEF DESCRIPTION OF THE DRAWINGS

The accompanying drawings are included to provide a further understanding of the present disclosure, and are incorporated in and constitute a part of this specification. The drawings illustrate embodiments of the present disclosure and, together with the description, serve to explain principles of the present disclosure. In the drawings:
FIG. 1 is a perspective view of a battery pack according to one or more embodiments of the present disclosure;
FIG. 2 is an exploded perspective view of a battery pack according to one or more embodiments of the present disclosure;
FIG. 3 is an exploded perspective view of a battery cell shown in FIG. 2, according to one or more embodiments of the present disclosure;
FIG. 4 is a cross-sectional perspective view taken along the line I-I' of FIG. 1, according to one or more embodiments of the present disclosure;
FIG. 5 is a view illustrating a state in which a buffer portion is coupled to a molding portion, according to one or more embodiments of the present disclosure;
FIG. 6 is a front view illustrating the buffer portion of FIG. 5, according to one or more embodiments of the present disclosure;
FIG. 7 is an exploded perspective view in which a molding portion is removed from a battery pack, according to one or more embodiments of the present disclosure;
FIG. 8 is a perspective view illustrating a state in which a buffer portion is coupled to a molding portion, according to one or more embodiments of the present disclosure;
FIG. 9 is a front view illustrating the buffer portion of FIG. 8, according to one or more embodiments of the present disclosure; and
FIG. 10 is a perspective view of a battery pack according to one or more embodiments of the present disclosure.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the scope of the present disclosure.

Hereinafter, example embodiments will be described in more detail with reference to the accompanying drawings. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

It will be further understood that the terms "comprises," "comprising," "includes," "including," "have," and "having," when used in this specification, specify the presence of the stated features, integers, steps, operations, elements, and/or components, but do not preclude the presence or addition of one or more other features, integers, steps, operations, elements, components, and/or groups thereof. Additionally, the terms "comprise(s)/comprising," "include(s)/including," "have/has/having" or similar terms include or support the terms "consisting of" and "consisting essentially of," indicating the presence of stated features, integers, steps, operations, elements, and/or components, without or essentially without the presence of other features, integers, steps, operations, elements, components, and/or groups thereof.

In addition, to help in the understanding of the present disclosure, the attached drawings may not be illustrated to scale, and dimensions of some components may be exaggerated. In the drawings, the relative sizes (*e.g*., including lengths, widths and thicknesses) of elements, layers, and regions may be exaggerated for clarity. Unless otherwise noted, like reference numerals denote like elements throughout the attached drawings and the written description, and thus, duplicative descriptions thereof may not be provided.

When two targets being compared are "the same", the targets may be "substantially the same". Being "substantially the same" may include a deviation that is considered low in the art, for example, a deviation within 5%. Also, uniformity of a parameter in a certain region may indicate uniformity from an average perspective.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

As used herein, the singular forms "a," "an" and "the" are intended to include the plural forms as well, unless the context clearly indicates otherwise.

Spatially relative terms, such as "on," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the drawings. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (*e.g*., rotated 90 degrees or at other orientations) and the spatially relative descriptors used herein should be interpreted accordingly.

It will be understood that when an element, such as an area, layer, film, region or portion, is referred to as being "on," "connected to," or "coupled to" another element, it can be directly on, connected to, or coupled to the other element, or one or more intervening elements may be present. In contrast, when an element or layer is referred to as being "directly on," "directly connected to", "directly coupled to", or "immediately adjacent to" another element or layer, there are no intervening elements or layers present. Also, when a portion is electrically coupled to another portion, the portions may be directly coupled to each other or the portions may be coupled to each other with another element therebetween. In addition, it will also be understood that when an element is referred to as being "between" two elements, it can be the only element between the two elements, or one or more intervening elements may also be present.

Throughout the specification, "A and/or B" may indicate A, B, or A and B unless otherwise specified. As used herein, the term "and/or" includes any and all combinations of one or more of the associated listed items. The expression "C to D" indicate C or more and D or less, unless otherwise specified.

Unless otherwise apparent from the present disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from among a, b, and c," "at least one from among a, b, and c," "one from among a, b, and c", "at least one of a to c" indicates only a, only b, only c, both a and b, both a and c, both b and c, all of a, b, and c, or variations thereof.

As used herein, the terms "use," "using," and "used" may be considered synonymous with the terms "utilize," "utilizing," and "utilized," respectively.

The terms used in the present specification are for describing embodiments of the present disclosure and are not intended to limit the present disclosure.

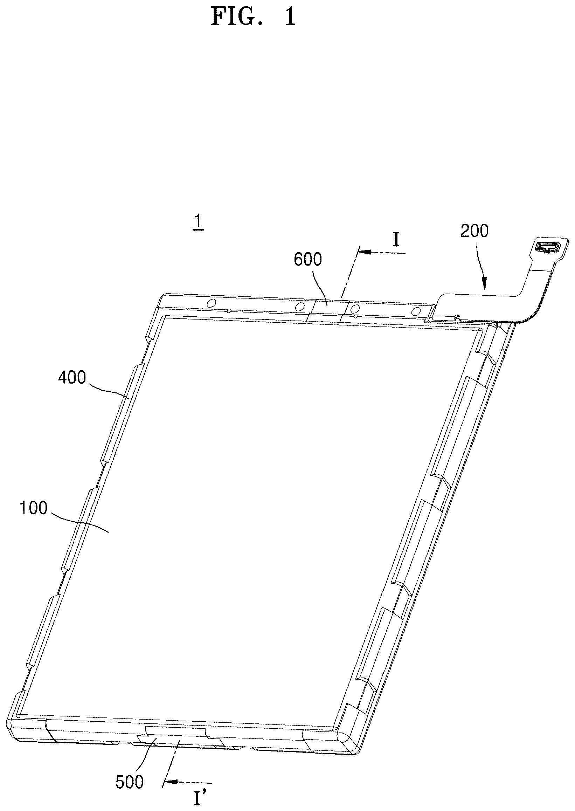

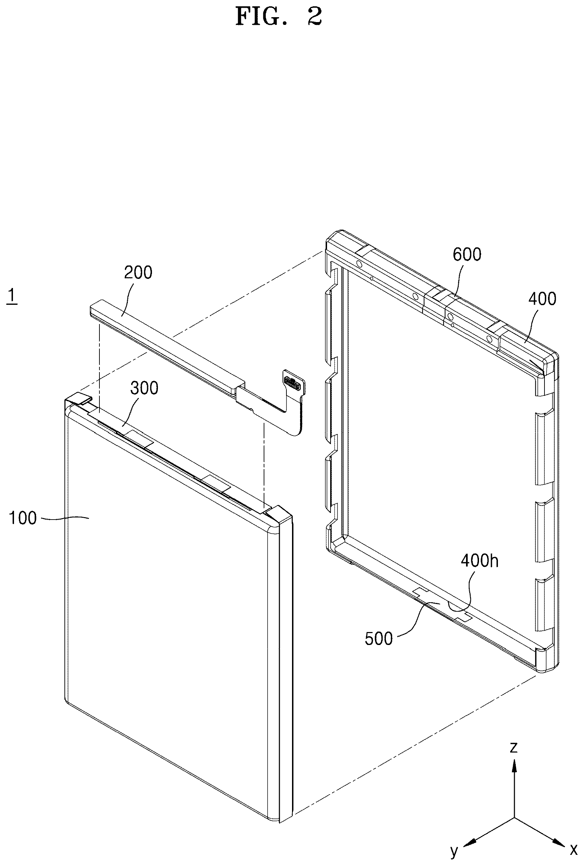

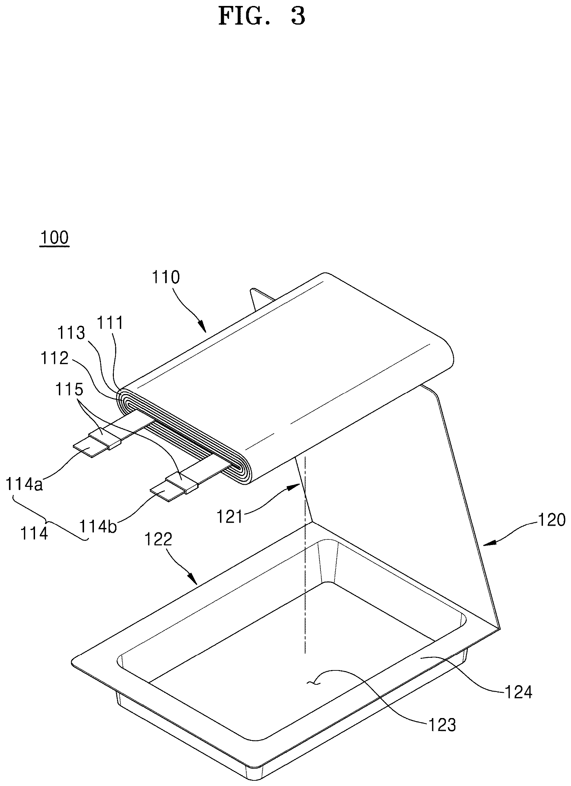

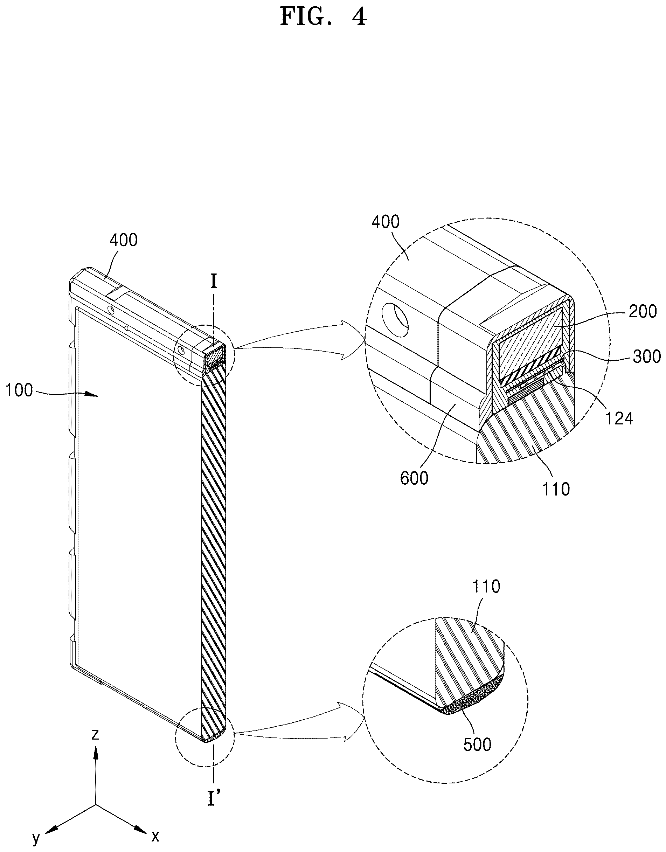

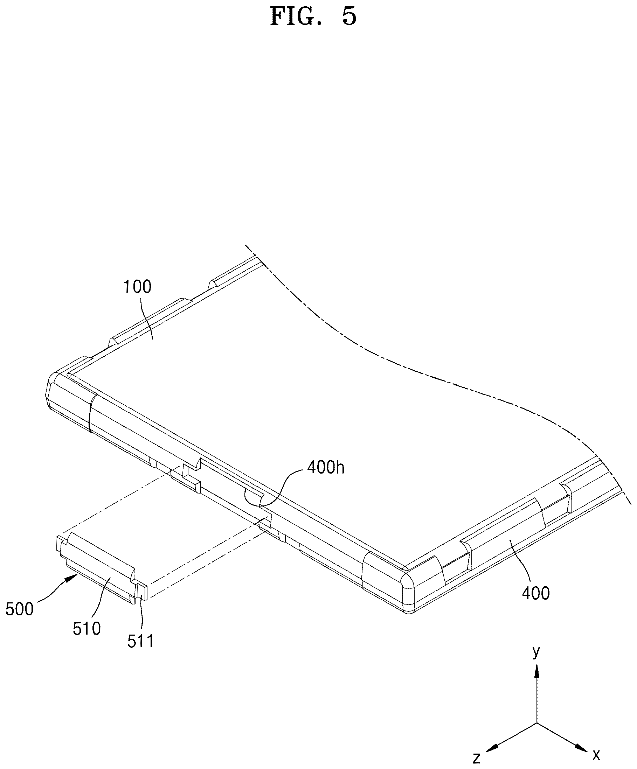

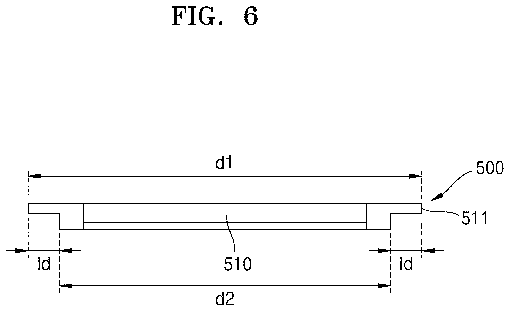

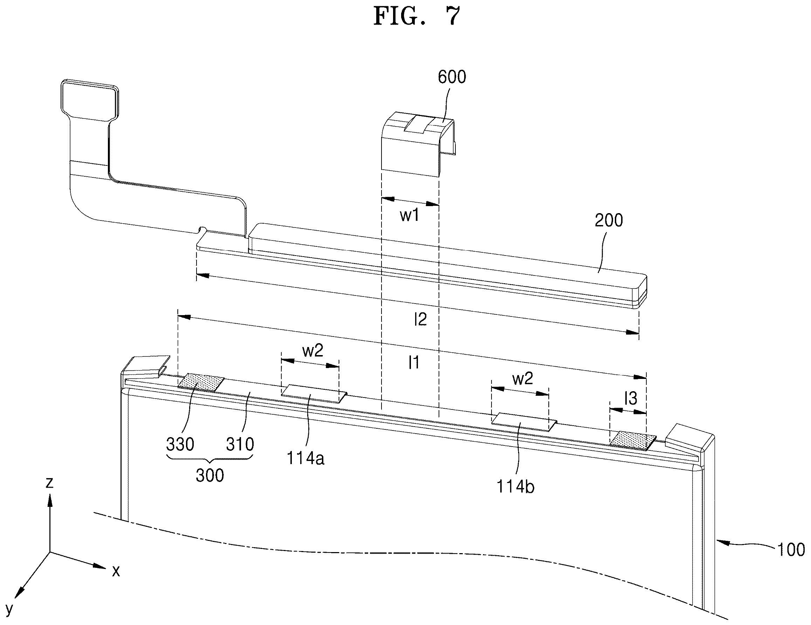

FIG. 1 is a perspective view of a battery pack according to one or more embodiments of the present disclosure. FIG. 2 is an exploded perspective view of the battery pack according to one or more embodiments of the present disclosure. FIG. 3 is an exploded perspective view of a battery cell shown in FIG. 2, according to one or more embodiments of the present disclosure. FIG. 4 is a cross-sectional perspective view taken along the line I-I' of FIG. 1, according to one or more embodiments of the present disclosure. FIG. 5 is a view illustrating a state in which a buffer portion is coupled to a molding portion, according to one or more embodiments of the present disclosure. FIG. 6 is a front view illustrating the buffer portion of FIG. 5, according to one or more embodiments of the present disclosure. FIG. 7 is an exploded perspective view in which the molding portion is removed from the battery pack, according to one or more embodiments of the present disclosure.

Referring to FIGS. 1 to 6, the battery pack 1 according to one or more embodiments of the present disclosure may include the battery cell 100 and may be mounted on (and/or in) an electronic device such as a smartphone, and may include the battery cell 100, a protection circuit module 200, a connecting portion 300, the molding portion 400, the buffer portion 500, and a protecting portion 600.

The battery pack 1 according to one or more embodiments of the present disclosure may be arranged such that the molding portion 400 surrounds a perimeter of the battery cell 100 while the protection circuit module 200 and the connecting portion 300 are mounted on one surface of the battery cell 100. The protecting portion 600 and the buffer portion 500 may each include an elastically deformable material and may each be arranged on one surface. The buffer portion 500 may be arranged on the one surface of the battery cell 100 opposite to where the protection circuit module 200 is arranged. The protecting portion 600 may be arranged on the same surface as the protection circuit module 200 (*e.g*., may be arranged on the other surface compared to the buffer portion 500).

In the present specification, for convenience of description, a first direction may be defined as a width direction of the battery cell 100, *e.g*., an x-axis direction, a second direction may be defined as a thickness direction of the battery cell 100, *e.g.,* a y-axis direction, and a third direction may be defined as a length direction of the battery cell 100, *e.g.,* a z-axis direction.

In one or more embodiments, one surface of the battery cell 100 where the protection circuit module 200 is arranged may be defined as an upper surface of the battery cell 100 (an upper surface based on FIG. 2), the other surface of the battery cell 100 opposite to the one surface may be defined as a lower surface of the battery cell 100 (a lower surface based on FIG. 2), and surfaces arranged on opposite sides of the battery cell 100, extending in the third direction, and covered by the molding portion 400 may be defined as side surfaces of the battery cell 100 (a left surface and a right surface based on FIG. 2).

Referring to FIG. 3, the battery cell 100 according to one or more embodiments of the present disclosure may include an electrode assembly 110 and a case 120.

The electrode assembly 110 may be manufactured in the form of a jelly roll by winding a separator 113 arranged between a first electrode plate 111 and a second electrode plate 112. Alternatively, in one or more embodiments, the electrode assembly 110 may be manufactured in the form of a stack by stacking a separator 113 between each of a plurality of first electrode plates 111 and second electrode plates 112, the first electrode plates 111 and the second electrode plates 112 being alternately stacked. For example, the electrode assembly 110 may be manufactured in the form of a stack by stacking the separator 113 between multiple first electrode plates 111 and second electrode plates 112, with the first and second electrode plates being alternately stacked. In one or more embodiments, the electrode assembly 110 may be manufactured by applying both a jelly roll and a stack. In other words, the electrode assembly 110 may be manufactured in different forms:
∘ Jelly Roll: By winding a separator 113 between a first electrode plate 111 and a second electrode plate 112.
∘ Stack: By stacking a separator 113 between multiple first electrode plates 111 and second electrode plates 112, with the plates alternately stacked
∘ Combination: By using both the jelly roll and stack methods.

For example, the electrode assembly 110 may be formed as a stack structure of the first electrode plate 111, the separator 113, and the second electrode plate 112, which are formed in a thin plate shape or a film shape, and then wound or stacked. When the electrode assembly 110 is formed by being wound, a winding axis may be parallel to a length direction of the case 120. The electrode assembly 110 may be a stack type (kind) instead of a winding type (kind), and a length direction the stacked electrode assembly 110 may be parallel to the length direction of the case 120.

A shape of the electrode assembly 110 is not limited to particular embodiments of the present disclosure. The electrode assembly 110 may be a Z-stack electrode assembly 110 in which a positive electrode plate and a negative electrode plate are inserted into opposite sides of the separator 113 folded in a Z-stack. One or more electrode assemblies 110 may be stacked such that long side surfaces of the electrode assemblies 110 are adjacent to each other and accommodated inside the case 120, and the number of electrode assemblies 110 is not limited to particular embodiments of the present disclosure. The first electrode plate 111 of the electrode assembly 110 may operate as a negative electrode, and the second electrode plate 112 may operate as a positive electrode. Obviously, the other way around is also possible.

The first electrode plate 111 may include a first active material-coated portion formed by coating a first active material on a first substrate, which is a sheet-shaped conductive material, and providing a first uncoated portion that is a portion where the first substrate is exposed because the first active material is not coated there. The first electrode plate 111 may be a negative electrode plate, and the first active material may include a negative electrode active material including a carbon material, a lithium metal, or a lithium alloy, the carbon material including crystalline carbon, amorphous carbon, a carbon composite, and/or carbon fiber.

For example, the first electrode plate 111 may be formed by applying a first electrode active material, such as graphite or carbon, to a first electrode current collector plate including a metal foil, such as a foil made of copper, a copper alloy, nickel, or a nickel alloy, and may include a first electrode tab 114b (or the first uncoated portion) that is a region where the first electrode active material is not applied. The first electrode tab 114b may be a path for a current flow between the first electrode plate 111 and a first current collector. In one or more embodiments, the first electrode tab 114b may be formed by cutting the first electrode plate 111 in advance when manufacturing the first electrode plate 111 so that it protrudes to one side portion of the cut first electrode plate 111, and may protrude further to the one side portion than the separator 113 without separate cutting (*e.g*., without having to cut a separate piece).

The second electrode plate 112 may have a different polarity from the first electrode plate 111, and may include a second active material-coated portion formed by coating a second active material on a second substrate, which is a sheet-shaped conductive material, and providing a second uncoated portion that is a portion where the second substrate is exposed because the second active material is not coated there. The second electrode plate 112 may be a positive electrode plate, and the second active material may include a positive electrode active material including lithium, such as LiCoO₂, LiNiO₂, LiMnO₂, LiMn₂O₄, or LiNi_{1-x-y}CoₓM_{y}O₂.

The second electrode plate 112 may be formed by applying a second electrode active material, such as a transition metal oxide, to a second electrode current collector plate including a metal foil, such as a foil made of aluminum or an aluminum alloy, and may include a second electrode tab 114a (or the second uncoated portion) that is a region where the second electrode active material is not applied.

The second electrode tab 114a may be a path for a current flow between the second electrode plate 112 and a second current collector. In one or more embodiments, the second electrode tab 114a may be formed by cutting the second electrode plate 112 in advance when manufacturing the second electrode plate 112 so that it protrudes to one side portion of the cut second electrode plate 112, and may protrude further to the same side (*e.g*., the one side portion) as the first electrode tab 114b (or to the other side portion in one or more embodiments) than the separator 113 without separate cutting (*e.g*., without having to cut a separate piece).

The separator 113 may be arranged between the first electrode plate 111 and the second electrode plate 112, and may insulate the first electrode plate 111 and the second electrode plate 112 while allowing lithium ions to be exchanged between the first electrode plate 111 and the second electrode plate 112. The separator 113 may have a sufficient length to completely insulate the first electrode plate 111 and the second electrode plate 112 from each other even if the electrode assembly 110 shrinks or expands while the battery pack 1 is charged or discharged.

An electrode tab portion 114 may be arranged on each of the first electrode plate 111 and the second electrode plate 112 and may protrude to one side. The electrode tab portion 114 may include the first electrode tab 114b and the second electrode tab 114a, wherein the second electrode tab 114a may be connected to an uncoated portion of the second electrode plate 112 and the first electrode tab 114b may be connected to an uncoated portion of the first electrode plate 111.

The electrode tab portions 114 may be electrically connected to each other and extend to the outside of the electrode assembly 110.

A film portion 115 may be arranged on the electrode tab portion 114, and the film portion 115 may be arranged on one surface of the electrode tab portion 114 or may be arranged to be around (*e.g*., surround) the electrode tab portion 114. The film portion 115 may seal the electrode tab portion 114 exposed to the outside of the electrode assembly 110, and to prevent or reduce the likelihood of a short circuit from occurring due to the electrode tab portion 114 coming into contact with a metal layer exposed at an end portion of a sealing portion 124 of the case 120. The film portion 115 may be thermally fused to the sealing portion 124 so that the electrode tab portion 114 and the sealing portion 124 are tightly coupled.

The case 120 may form the exterior of the battery pack 1 and includes the electrode assembly 110 arranged therein. A shape and size of the case 120 are not particularly limited, and may have a shape and size corresponding to the shape and size of the electrode assembly 110.

For example, the case 120 may have a hollow rectangular parallelepiped shape. In one or more embodiments, the case 120 may have a polyhedral shape other than the rectangular parallelepiped shape, or may have a cylindrical shape.

The case 120 may include a cover 121, a lower case 122, an internal space 123, and the sealing portion 124. The lower case 122 may include the internal space 123 having a dimension greater than that of the electrode assembly 110, and the electrode assembly 110 may be inserted into the internal space 123.

The cover 121 may be arranged on an upper surface of the lower case 122 in order to be opened or closed so as to cover the electrode assembly 110 when the electrode assembly 110 is inserted into the internal space 123.

The sealing portion 124 may be arranged along an upper edge of the lower case 122. A portion of the electrode tab portion 114 may be exposed to the outside of the case 120 while the electrode assembly 110 is accommodated inside the case 120.

The film portion 115 provided in the electrode tab portion 114 may be arranged between the cover 121 and the lower case 122 at a location corresponding to the sealing portion 124.

Referring to FIG. 2, the protection circuit module 200 may extend along the width direction (or in other embodiments, the length direction) and may be electrically connected to the electrode assembly 110, and may be arranged on one side of the battery cell 100.

For example, the protection circuit module 200 may be arranged on one surface (an upper surface based on FIG. 2) of the battery cell 100 extending along the width direction to protect the battery cell 100 from one or more suitable risk factors, such as overcharging, overdischarging, overcurrent, and/or short circuit. of the battery cell 100.

The protection circuit module 200 according to one or more embodiments of the present disclosure may include a printed circuit board (PCB) and may include at least one of a metal-oxide semiconductor field effect transistor (MOSFET), a fuse, a resistor, a condenser, and/or a temperature sensor, which are for current control and protection.

The MOSFET of the protection circuit module 200 may control a current flow to the battery cell 100 and protect the battery cell 100 by blocking circuit if (*e.g*., when) an overcurrent or overcharge state occurs. In one or more embodiments, the temperature sensor of the protection circuit module 200 may monitor the temperature of the battery cell 100 in real time, and restrict or stop current flow during overheating.

The protection circuit module 200 may be electrically connected to the battery cell 100 and may perform a cell-balancing function to adjust voltage imbalance between the battery cells 100.

Accordingly, the protection circuit module 200 may play an important role in maximizing or increasing the performance and/or lifespan of the battery cell 100 or battery pack 1 through the cell-balancing function.

The protection circuit module 200 may be placed on a top or a side surface of the battery cell 100. For example, the protection circuit module 200 may be arranged between the battery cell 100 and the molding portion 400, and a portion of the protection circuit module 200 may be surrounded by the protecting portion 600.

Accordingly, the protection circuit module 200 may be protected from an external impact and/or physical damage.

Referring to FIGS. 4 and 7, the protection circuit module 200 may be electrically connected to the electrode tab portion 114. For example, the second electrode tab 114a, *e.g*., a positive electrode tab, and the first electrode tab 114b, *e.g.,* a negative electrode tab, may be connected to different regions of the protection circuit module 200.

The protection circuit module 200 may be connected to the battery cell 100, for example, the protection circuit module 200 may be connected to the battery cell 100 through the connecting portion 300.

One surface of the protection circuit module 200 facing (*e.g*., opposite to) the battery cell 100 may be adhered to one surface of the battery cell 100. For example, the connecting portion 300 having adhesiveness may be arranged between the protection circuit module 200 and the battery cell 100, and the protection circuit module 200 may be fixed to one surface of the battery cell 100 as one surface of the connecting portion 300 is in surface contact with the one surface of the protection circuit module 200, and the other surface of the connecting portion 300, which is opposite to the one surface, may be in contact with the one surface of the battery cell 100.

Referring to FIG. 7, the first electrode tab 114b and the second electrode tab 114a may be spaced and/or apart (*e.g*., spaced apart or separated) from each other along the first direction (*e.g*., the x direction) on one surface of the battery cell 100, and a length l2 of the protection circuit module 200 in the first direction may be relatively short compared to (*e.g*., may be less than) a width of the battery cell 100 (*e.g*., the length l2 of the protection circuit module 200 may be shorter than the width of the battery cell 100 along the first direction).

Referring to FIGS. 2, 4, and 7, the connecting portion 300 may be arranged between the battery cell 100 and the protection circuit module 200 and may connect the protection circuit module 200 to the battery cell 100, and may include a connecting body 310 and a reinforcing portion 330.

Referring to FIG. 7, the connecting body 310 may extend along the width direction of the battery cell 100 in the first direction and may be in contact with the battery cell 100, and may be in the form of a tape with an adhesive applied to one surface. For example, the connecting body 310 may be arranged between the battery cell 100 and the protection circuit module 200. One surface of the connecting body 310 may be adhered to the upper surface of the battery cell 100, and the protection circuit module 200 may be arranged on the other surface of the connecting body 310.

In one or more embodiments, the connecting body 310 attached to the upper surface of the battery cell 100 may be arranged between the electrode tab portion 114 and the sealing portion 124. The electrode tab portion 114 connected to the electrode assembly 110 and exposed to the outside of the sealing portion 124 may be bent and arranged parallel to the upper surface of the battery cell 100. In such embodiments, the connecting body 310 may be inserted between the electrode tab portion 114 and the sealing portion 124, which are arranged parallel to each other.

A width of the connecting body 310 may be greater than a width of the first electrode tab 114b or the second electrode tab 114a. Accordingly, the electrode tab portion 114 and the protection circuit module 200 may be arranged on one surface (an upper surface based on FIG. 7) of the connecting body 310, which is exposed to the outside.

The connecting body 310 may have a pre-set thickness and may include a material capable of absorbing external impact and vibration. Also, the connecting body 310 may include an insulating material.

For example, the connecting body 310 may include one or more suitable synthetic resin materials such as polyurethane foam, polyethylene foam, and/or silicone foam. However, the present disclosure is not limited thereto, and modifications to one or more suitable materials may be possible within the technical scope of being arranged between the battery cell 100 and the protection circuit module 200 and capable of absorbing an external impact.

For example, the connecting body 310 may enable the protection circuit module 200 to be firmly adhered to a surface of the battery cell 100 to prevent or reduce the likelihood of the protection circuit module 200 being displaced due to vibration or an impact, and may operate as a buffer to prevent or reduce the likelihood of the battery cell 100 or the protection circuit module 200 being damaged due to an external impact or vibration.

In one or more embodiments, safety may be secured or improved by preventing or reducing the likelihood of an electrical short circuit between the battery cell 100 and the protection circuit module 200, and the protection circuit module 200 may be prevented from pressing on or damaging the battery cell 100, or the likelihood of the protection circuit module 200 pressing on or damaging the battery cell 100 may be reduced.

The reinforcing portion 330 according to one or more embodiments of the present disclosure may be arranged on one surface of the connecting body 310 facing (*e.g*., opposite to) the protection circuit module 200, and may include an elastically deformable material.

The reinforcing portion 330 may include a non-Newtonian synthetic resin having viscosity or physical properties changing according to externally applied stress and a shear rate. For example, the reinforcing portion 330 may also be referred to as a shear-responsive synthetic resin or a viscosity-adaptive synthetic resin.

For example, the reinforcing portion 330 may include a material including non-Newtonian polyurethane. However, the present disclosure is not limited thereto, and a material of the reinforcing portion 330 may be modified to include one or more suitable materials within the technical scope of becoming solid when an impact is applied in response to shear stress and having flexible characteristics in a normal (non-impact) state.

Referring to FIG. 7, a plurality of reinforcing portions 330 may be provided and arranged at opposite end portions of the connecting body 310 along the length direction of the connecting body 310. For example, a respective one of the plurality of reinforcing portion 330 is arranged on each of opposite end portions of the connecting body 310. For example, one reinforcing portion 330 is arranged at each of the opposite end portions of the connecting body 310.

The reinforcing portion 330 according to one or more embodiments of the present disclosure may have a pre-set thickness and may be attached to opposite end portions of the connecting body 310 along a length direction of the connecting body 310. Accordingly, strength and durability of the connecting body 310 may be reinforced.

When an external impact is applied, the reinforcing portion 330 may instantly harden to reflect or disperse the impact and absorb impact energy so that the impact energy does not reach the battery cell 100.

In one or more embodiments, the reinforcing portion 330 may be arranged symmetrically at the opposite end portions of the connecting body 310. For example, lengths, thicknesses, and shapes of the plurality of reinforcing portions 330 may all be the same. Accordingly, an external impact applied to the connecting portion 300 may be evenly distributed along the opposite end portions of the connecting portion 300.

The reinforcing portion 330 may be arranged at an end portion of the connecting body 310 so that a portion of the reinforcing portion 330 protrudes to the outside of the connecting body 310. For example, at least a portion of the reinforcing portion 330 may be arranged to overlap a portion of the connecting body 310, and a remaining portion may protrude to the outside of the connecting body 310 in the width direction (*e.g*., x direction) of the battery cell 100.

However, the present disclosure is not limited thereto, and the end portion of the reinforcing portion 330 may be arranged to match the end portion of the connecting body 310. For example, the side surfaces of the end portions of the reinforcing portion 330 and the connecting body 310 may be arranged on a same plane.

The length l1 of the connecting portion 300 in the width direction of the battery cell 100, according to one or more embodiments of the present disclosure, may be greater than the length l2 of the protection circuit module 200 in the width direction. When the protection circuit module 200 is arranged on the connecting portion 300, a portion of the connecting portion 300 may protrude to the outside of opposite end portions of the protection circuit module 200.

Accordingly, a sufficient area of the connecting portion 300 for buffering may be secured, and stable insulation may be achieved between the protection circuit module 200 and the battery cell 100.

A length l3 of the reinforcing portion 330 in the width direction, arranged on the opposite end portions of the connecting body 310 may be 0.7 mm to 1.3 mm, for example, 1 mm. Accordingly, a sufficient area of the reinforcing portion 330 for reinforcing the strength of the connecting body 310 may be secured.

When the protection circuit module 200 is arranged on the connecting portion 300, the reinforcing portion 330 that overlaps the connecting body 310 may protrude to the outside of the connecting body 310 and the outside of the protection circuit module 200. Here, the length l3 in the width direction of the battery cell 100 of the reinforcing portion 330 protruding to the outside of the protection circuit module 200 may be at least 0.7 mm.

For example, the reinforcing portion 330 may be arranged in a region where a corner (and/or end) of the protection circuit module 200 and the connecting portion 300 are in contact with each other. Accordingly, if (*e.g*., when) an external impact is applied, the reinforcing portion 330 may prevent or reduce the likelihood of the battery cell 100 being damaged as one surface of the battery cell 100 is hit by the corner of the protection circuit module 200 or as the protection circuit module 200 applies excessive pressure to one surface of the battery cell 100.

Referring to FIGS. 1, 2, 4, and 5, the molding portion 400 may be coupled to the battery cell 100 while around (*e.g*., surrounding) the battery cell 100, and may protect the battery cell 100 from an external impact or physical damage by covering an upper surface, a lower surface, and opposite side surfaces of the battery cell 100.

The molding portion 400 may be formed by curing an elastic body and/or insulating material in a flowable state while the elastic body and/or the insulating material is around (*e.g*., surrounding) the battery cell 100 and the protection circuit module 200. For example, the molding portion 400 may be formed by arranging the battery cell 100 on a mold while the connecting portion 300 and the protection circuit module 200 are mounted on the battery cell 100, and then injecting an insulating material into the mold.

The molding portion 400 may be attached to the upper and lower surfaces and the opposite side surfaces of the battery cell 100 through molding. For example, the molding portion 400 may be tightly attached while around (*e.g*., surrounding) a perimeter of the battery cell 100 through a method such as injection molding or compression molding.

Here, the molding portion 400 formed on the upper surface of the battery cell 100 may be around (*e.g*., surround) the protection circuit module 200, and may penetrate between the sealing portion 124 and the bent electrode tab portion 114 and between the battery cell 100 and the protection circuit module 200 to form a firm coupling.

Accordingly, the molding portion 400 may protect the battery cell 100 from an external impact, a scratch, vibration, and/or the like, and provide an electrical insulation function to effectively prevent or reduce unnecessary electrical contact between the battery cells 100.

The molding portion 400 may include an elastic body and/or an insulator. For example, the molding portion 400 may include synthetic resin, resin, polyurethane, polypropylene, polyethylene, epoxy, silicone, polyimide, acrylic, fluororesin, rubber, and/or the like.

Because the molding portion 400 surrounds the upper surface, the lower surface, and the opposite side surfaces of the battery cell 100, the battery cell 100 may be protected from an external impact. In one or more embodiments, locations of the battery cell 100, the connecting portion 300, and the protection circuit module 200 may be fixed at once (*e.g*., simultaneously) by the molding portion 400, the strength of the battery pack 1 may be improved, and gaps between the connecting portion 300 and respective components may be removed, and thus, waterproofing and dustproofing effects may be achieved.

Referring to FIG. 5, an insertion groove portion 400h into which the buffer portion 500 may be inserted may be formed on one side of the molding portion 400. The insertion groove portion 400h may be formed in a shape corresponding to the buffer portion 500, and the buffer portion 500 may be firmly fitted into the insertion groove portion 400h.

For example, the insertion groove portion 400h may be formed in a '+' shape to correspond to one surface of the buffer portion 500. Accordingly, coupling stability between the insertion groove portion 400h and the buffer portion 500 may be improved, and the resistance to rotational or torsional load may be strengthened.

Also, the load of the battery cell 100 may be distributed in several directions to enhance the durability of the battery pack 1, and stronger coupling force may be provided by increasing a contact area.

Referring to FIGS. 1, 2, 4, 5, and 6, the buffer portion 500 is coupled to the molding portion 400 and is arranged on the other side opposite to one side of the battery cell 100 connected to the protection circuit module 200, and may include an elastically deformable material. For example, the buffer portion 500 may be arranged on the lower surface of the battery cell 100 and may be to absorb and/or reflect an impact applied from the outside.

For example, the buffer portion 500 may include a material including a non-Newtonian synthetic resin having viscosity or physical properties changing according to externally applied stress and a shear rate. For example, the buffer portion 500 may also be referred to as a shear-responsive synthetic resin or a viscosity-controlled synthetic resin.

For example, the buffer portion 500 may include a material including non-Newtonian polyurethane. However, the present disclosure is not limited thereto, and modifications to one or more suitable materials may be possible within the technical scope of having increased strength if (*e.g*., when) an impact is applied in response to shear stress and having flexible characteristics in a normal state (non-impact).

The buffer portion 500 according to one or more embodiments of the present disclosure may be arranged at a center of the battery cell 100 based on the width direction.

In general, a point where maximum stress is applied according to a drop angle if (*e.g*., when) the battery cell 100 is dropped from a certain height may be located at a center region of the battery cell 100 in the width direction. For example, the point where the maximum stress is applied may be located at a center portion of the lower surface of the battery cell 100 in the width direction.

The buffer portion 500 according to one or more embodiments of the present disclosure may be arranged at the center portion of the battery cell 100, which receives maximum stress if (*e.g*., when) dropped, thereby absorbing an external impact to the battery cell 100 to prevent or reduce the likelihood of physical damage and prevent or reduce the likelihood of an internal short circuit, a fire, an explosion, and/or the like caused by the impact.

The buffer portion 500 according to one or more embodiments of the present disclosure may be formed separately from the molding portion 400. The buffer portion 500 may be coupled to the insertion groove portion 400h after the molding portion 400 is formed to be around (*e.g*., surround) the perimeter of the battery cell 100, and thus, the buffer portion 500 may be adhered to one surface of the battery cell 100. However, the present disclosure is not limited thereto, and the buffer portion 500 may be formed integrally with the molding portion 400. In one or more embodiments, the buffer portion 500 may be formed by being additionally injected, *i.e.,* double-injected, into the insertion groove portion 400h after the molding portion 400 has been injection molded.

Referring to FIGS. 4 to 6, the buffer portion 500 may include a buffer body 510. The buffer body 510 may be in contact with the battery cell 100 and may have a protrusion 511 formed toward the outside, and may be fitted into the molding portion 400.

In the present specification, for convenience of description, one surface (an upper surface based on FIG. 6) of the buffer portion 500 that may be in contact with the lower surface of the battery cell 100 may be defined as an upper surface of the buffer portion 500, and the other surface (a lower surface based on FIG. 6) of the buffer portion 500 opposite to the one surface may be defined as a lower surface of the buffer portion 500.

Referring to FIG. 1, if (*e.g*., when) the buffer portion 500 is fitted into the molding portion 400, the lower surface of the buffer portion 500 and the lower surface of the molding portion 400 arranged at a lower portion of the battery cell 100 may be formed on a same plane. In one or more embodiments, if (*e.g*., when) one surface of the molding portion 400 is formed as a curved surface having a pre-set radius of curvature, one surface of the buffer portion 500 coupled to the one surface of the molding portion 400 may also have a same radius of curvature.

Accordingly, the buffer portion 500 and the molding portion 400 may be smoothly connected to each other to be easily mounted on an electronic device and comfortably held by a user without causing a foreign body sensation (*e.g*., without out causing a discontinuity in the lower surface of the molding portion 400).

According to one or more embodiments of the present disclosure, the protrusion 511 protruding outward may be formed on one side of the buffer body 510.

Referring to FIG. 6, the protrusion 511 may extend along the width direction of the battery cell 100.

The protrusion 511 may be arranged on opposite sides of the buffer body 510 and may extend along the width direction of the battery cell 100. At this time, the protrusions 511 protruding from the opposite sides of the buffer body 510 may be symmetrical. However, the present disclosure is not limited to this, and the protrusions 511 may have different shapes.

A length d1 of the upper surface of the buffer portion 500 in the width direction may be greater than a length d2 of the lower surface of the buffer portion 500 in the width direction. For example, the length d1 of the upper surface of the buffer portion 500 may be greater than the length d2 of the lower surface of the buffer portion 500.

Because the protrusion 511 protrude from opposite sides of the buffer body 510, the upper surface of the buffer portion 500 may roughly have a '+' shape. Also, a shape of the insertion groove portion 400h into which the buffer portion 500 is inserted may correspond to the '+' shape.

The buffer portion 500 may be formed to have a step. When the protrusion 511 protrudes in the first direction from an upper portion (an upper side based on FIG. 6) of the buffer body 510, the step having a pre-set length Id may be formed between the upper surface and the lower surface of the buffer portion 500.

Because the protrusion 511 is arranged on opposite sides of the buffer body 510, the step may be formed on opposite sides of the buffer body 510. Accordingly, the length d1 of the upper surface of the buffer portion 500 may have a value equal to a value obtained by adding two times of the length ld of the step to the length d2 of the lower surface of the buffer portion 500.

When the step is formed in the buffer portion 500, a contact area between the molding portion 400, for example, the insertion groove portion 400h, and the buffer portion 500 may increase. Accordingly, frictional force between the molding portion 400 and the buffer portion 500 may increase, and thus, the buffer portion 500 may not be easily separated from the molding portion 400 but may be firmly fixed to the molding portion 400. For example, if (e.g., when) the step is created in the buffer portion 500, it enlarges the contact area with the molding portion 400, particularly the insertion groove portion 400h. As a result, the frictional force between the molding portion 400 and the buffer portion 500 increases, making the buffer portion 500 more securely attached to the molding portion 400.

Also, if (*e.g*., when) an impact is applied from the outside to the buffer portion 500, stress may not be concentrated at a specific point but may be evenly distributed over the entire contact surface, thereby improving the stability of the entire battery pack 1.

According to one or more embodiments of the present disclosure, a contact area between the buffer portion 500 and the battery cell 100 may be relatively large compared to (*e.g*., may be greater than) a contact area between the first electrode tab 114b or the second electrode tab 114a and the protection circuit module 200. Hereinafter, for convenience of description, the first electrode tab 114b or the second electrode tab 114a may be referred to as an "electrode tab".

The length d1 of the buffer portion 500 in contact with the battery cell 100 may be greater than a length w2 in the width direction of the electrode tab that is in contact with the protection circuit module 200.

For example, when a contact area between the first or second electrode tab 114a or 114b and the protection circuit module 200 is defined as a value obtained by multiplying the length w2 of the electrode tab 114a or 114b by a thickness of the battery cell 100 (according to embodiments in which the electrode tab extends along the entire thickness of the battery cell 100), the contact area of the buffer portion 500 may be greater than the contact area of the electrode tab 114a or 114b. For example, a minimum contact area of the buffer portion 500 may be a value obtained by multiplying the length w2 of the electrode tab 114a or 114b by the thickness of the battery cell 100 (according to embodiments in which the electrode tab 114a or 114b contacts the battery cell 100 along its entire thickness).

According to one or more embodiments, the length w2 of the electrode tab 114a or 114b in the width direction may be 6 mm, and the thickness of the battery cell 100 may be 5.58 mm. At this time, a minimum contact area of the buffer portion 500 may be 33.48 mm².

When the buffer portion 500 comes into contact with the battery cell 100 by the minimum contact area or more, an impact absorption amount of the buffer portion 500 may meet a pre-set standard, and thus, the battery cell 100 may be safely protected from an external impact.

Referring to FIGS. 1, 2, 4, and 7, the protecting portion 600 may be around (*e.g*., surround) the protection circuit module 200 and may be coupled to the molding portion 400, and may include an elastically deformable material.

The protecting portion 600 may be include a thermosetting resin, thermoplastic resin, and/or the like, which is elastically deformable.

According to one or more embodiments, the protecting portion 600 may include a material including a non-Newtonian synthetic resin having viscosity or physical properties changing according to externally applied stress and a shear rate. For example, the protecting portion 600 may also be referred to as a shear-responsive synthetic resin or a viscosity-controlled synthetic resin.

For example, the protecting portion 600 may include a material including non-Newtonian polyurethane. However, the present disclosure is not limited thereto, and modifications to one or more suitable materials may be possible within the technical scope of having increased strength if (*e.g*., when) an impact is applied in response to shear stress and having flexible characteristics in a normal (non-impact) state.

Referring to FIG. 7, the protecting portion 600 may be formed to be around (*e.g*., surround) three surfaces of the protection circuit module 200 excluding one side of the protection circuit module 200 facing (*e.g*., opposite to) the battery cell 100.

One surface of the protecting portion 600 may be in contact with the protection circuit module 200, the connecting portion 300, and the battery cell 100 concurrently (*e.g*., simultaneously). Accordingly, the protection circuit module 200, the connecting portion 300, and the battery cell 100 may be fixed concurrently (*e.g*., simultaneously), and even if (*e.g*., when) an impact is applied from the outside, the protection circuit module 200 may not be easily separated from the battery cell 100.

The protecting portion 600 according to one or more embodiments of the present disclosure may be arranged between the first electrode tab 114b and the second electrode tab 114a. For example, the protecting portion 600 may be arranged at a center between the first electrode tab 114b and the second electrode tab 114a. For example, the protecting portion 600 may be arranged at a center of the upper surface of the battery cell 100 in the width direction.

When the battery cell 100 is dropped and collides with the ground, there is a risk that the protection circuit module 200 may be separated and the battery cell 100 may be damaged if the upper surface of the battery cell 100 hits the ground first. At this time, the region that receives the greatest stress on the upper surface of the battery cell 100 may be a center portion of the upper surface of the battery cell 100.

The protecting portion 600 according to one or more embodiments of the present disclosure may be arranged between the first electrode tab 114b and the second electrode tab 114a to efficiently absorb an impact if (*e.g*., when) dropped, thereby preventing or reducing the likelihood of damage to the battery cell 100 and preventing or reducing the likelihood of the protection circuit module 200 being separated from the battery cell 100. Thus, the structural stability of the battery cell 100 may be improved.

A length w1 of the protecting portion 600 based on the length direction of the protection circuit module 200 may be relatively large compared to (*e.g*., may be greater than) the length w2 of the electrode tab 114a or 114b. For example, the length w1 of the protecting portion 600 in the width direction may be greater than the length w2 of the electrode tab 114a or 114b in the width direction of the battery cell 100. Accordingly, a minimum contact area may be secured between the protecting portion 600 and the protection circuit module 200 or between the protecting portion 600 and the battery cell 100.

For example, if (*e.g*., when) a contact area is defined as a value obtained by multiplying the thickness of the battery cell 100 (in embodiments in which the protecting portion 600 covers at least the entire thickness of the battery cell 100 or the electrode tab 114a or 114b covers the entire thickness of the battery cell 100) by the length w1 of the protecting portion 600 or the lengthw2 of the electrode tab 114a or 114b, respectively, a contact area of the protecting portion 600 may be larger than a contact area of the electrode tab 114a or 114b. For example, a minimum contact area of the protecting portion 600 may be a value obtained by multiplying the length w2 of the electrode tab 114a or 114b by the thickness of the battery cell 100.

When the protecting portion 600 comes into contact with the battery cell 100 and the protection circuit module 200 by the minimum contact area or more, an impact absorption amount of the protecting portion 600 may meet a pre-set standard, and the battery cell 100 and the protection circuit module 200 may be safely protected from an external impact.

Referring to FIG. 4, one surface of the protecting portion 600 may be arranged on a same plane as the molding portion 400. Accordingly, the protecting portion 600 and the molding portion 400 may be smoothly connected without a step between the protecting portion 600 and the molding portion 400.

The protecting portion 600 according to one or more embodiments of the present disclosure may be formed by a double injection molding method in which the molding portion 400 is injection-molded while leaving a region in which the protecting portion 600 is to be arranged empty, and then the protecting portion 600 is additionally injected into the empty space. For example, the molding portion 400 and the protecting portion 600 may be integrally formed.

However, the present disclosure is not limited thereto, and the protecting portion 600 may be formed separately from the molding portion 400 and then coupled to the molding portion 400 by being fitted into the empty space of the molding portion 400.

Hereinafter, operating principles and effects of the battery pack 1 according to one or more embodiments of the present disclosure will be described.

Referring to FIGS. 1 to 7, the battery pack 1 may include the battery cell 100, the protection circuit module 200, the connecting portion 300, the molding portion 400, the buffer portion 500, and the protecting portion 600.

The molding portion 400 includes an elastic body and/or an insulating material and is arranged to be around (*e.g*., surround) the upper surface, the lower surface, and the opposite side surfaces of the battery cell 100. When the battery cell 100 is mounted on an electronic device, the molding portion 400 may prevent or reduce direct contact between the battery cell 100 and the electronic device, thereby reducing physical damage and stably fixing the battery cell 100 to the electronic device. Also, the molding portion 400 may protect the battery cell 100 from an external impact.

The protecting portion 600 and the buffer portion 500 may be respectively arranged on upper and lower sides (upper and lower sides based on FIG. 1) of the battery cell 100.

The protecting portion 600 and the buffer portion 500 coupled to the molding portion 400 may include an elastically deformable material. Accordingly, if (*e.g*., when) an impact and vibration are applied from the outside of the battery cell 100, the protecting portion 600 and the buffer portion 500 may be to absorb the impact and vibration, thereby preventing or reducing the likelihood of the battery cell 100 being damaged.

The reinforcing portion 330 having a pre-set width may be arranged on opposite sides of the connecting body 310 arranged on one surface of the battery cell 100. When the reinforcing portion 330 is arranged in a region where the corner of the protection circuit module 200 and the battery cell 100 are in contact with each other, the battery cell 100 may be protected so that the protection circuit module 200 does not damage or apply pressure to the battery cell 100 if (*e.g*., when) an external impact is applied.

The reinforcing portion 330, the buffer portion 500, and the protecting portion 600 may include non-Newtonian polyurethane having viscosity or physical properties changing according to externally applied stress and/or a shear rate.

The buffer portion 500 is arranged at a bottom portion (a lower side based on FIG. 1) of the battery cell 100, and may be arranged at a center portion in the width direction of the battery cell 100, which is a portion where the most stress may be applied if (*e.g*., when) the battery cell 100 is dropped. Accordingly, damage to the battery cell 100 may be prevented or reduced as the buffer portion 500 relieves stress concentration caused by the impact.

Also, because the buffer portion 500 protects the most vulnerable portion of the battery cell 100, durability of the battery cell 100 may increase and the product life may be extended.

The buffer portion 500 may be fitted into the insertion groove portion 400h of the molding portion 400, and the protrusion 511 may be arranged on opposite sides to have a step along the width direction of the battery cell 100. For example, a length of the upper surface of the buffer portion 500 may be greater than a length of the lower surface of the buffer portion 500, and a contact area between the insertion groove portion 400h and the buffer portion 500 may increase due to the step.

Accordingly, the buffer portion 500 may be more stably coupled to the insertion groove portion 400h and may not be easily separated even if (*e.g*., when) external force is applied.

Referring to FIGS. 1, 2, 4, and 7, the protecting portion 600 may be arranged to face the buffer portion 500. For example, the protecting portion 600 may be arranged on the upper surface of the battery cell 100 and may be fixed while concurrently (*e.g*., simultaneously) being in contact with the protection circuit module 200, the connecting portion 300, and the battery cell 100.

The protecting portion 600 according to one or more embodiments of the present disclosure may be arranged in the center portion of the upper surface of the battery cell 100, that is, between the first electrode tab 114b and the second electrode tab 114a, which are spaced and/or apart (*e.g*., spaced apart or separated) from each other, to absorb an impact and/or vibration applied from the outside and to protect the protection circuit module 200 and the battery cell 100. Also, the protecting portion may prevent or reduce the likelihood of the protection circuit module 200 being separated from the battery cell 100.

In the battery pack 1 according to one or more embodiments of the present disclosure, the buffer portion 500 and the protecting portion 600, which each include an elastically deformable material, are each coupled to the molding portion 400 and arranged at the center of the battery cell 100 in the width direction, thereby absorbing an impact applied from the outside and preventing or reducing the likelihood of physical damage to the battery cell 100.

Also, the step may be formed on opposite sides of the buffer portion 500 along the width direction of the battery cell 100, and thus, the buffer portion 500 may be firmly coupled to the molding portion 400. Accordingly, the buffer portion 500 may not be easily separated from the molding portion 400 even if (*e.g*., when) an impact is applied from the outside.

Also, the reinforcing portion 330 including an elastically deformable material may be arranged on opposite sides of the connecting portion 300 to prevent or reduce the likelihood of the protection circuit module 200 damaging or applying pressure to the battery cell 100, thereby protecting the battery cell 100.

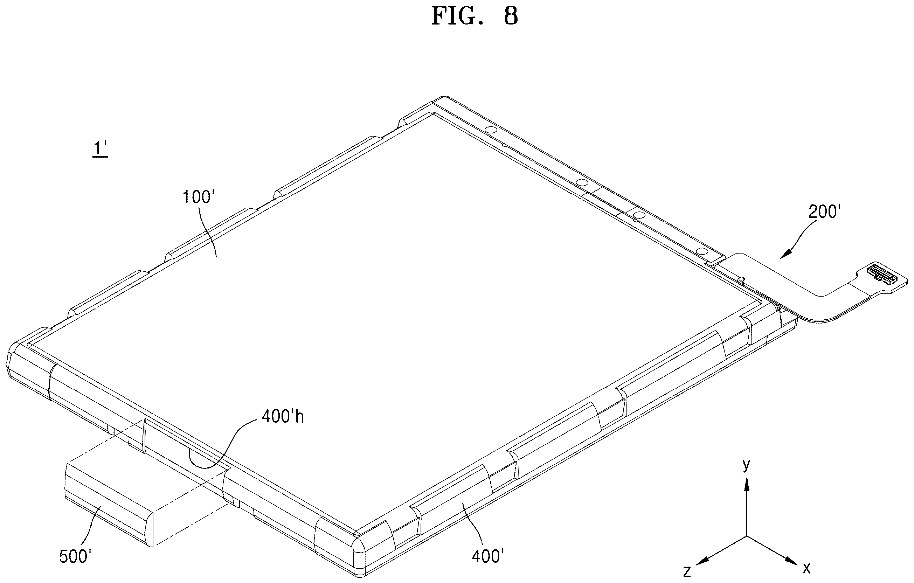

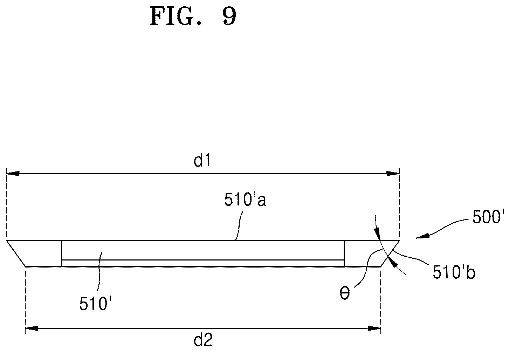

Hereinafter, a configuration, operating principles, and effects of a battery pack according to one or more embodiments of the present disclosure will be described. FIG. 8 is a perspective view illustrating a state in which a buffer portion is coupled to a molding portion, according to one or more embodiments of the present disclosure. FIG. 9 is a front view illustrating the buffer portion of FIG. 8, according to one or more embodiments of the present disclosure.

Referring to FIGS. 8 and 9, the battery pack 1' according to one or more embodiments of the present disclosure may include a battery cell 100', a protection circuit module 200', a connecting portion, a molding portion 400', a buffer portion 500', and a protecting portion.

A configuration of the buffer portion 500' of the battery pack 1' according to one or more embodiments of the present disclosure is different from a configuration of the buffer portion 500 of the battery pack 1 according to FIGS. 1-7, and thus, the buffer portion 500' will be mainly described.

Referring to FIGS. 8 and 9, the buffer portion 500' is coupled to the molding portion 400' and is arranged on the other side opposite to one side of the battery cell 100' connected to the protection circuit module 200', and may include an elastically deformable material.

The buffer portion 500' according to one or more embodiments of the present disclosure may be formed separately from the molding portion 400'. The buffer portion 500' may be coupled to an insertion groove portion 400'h after the molding portion 400' is formed to be around (*e.g*., surround) a perimeter of the battery cell 100', and thus, the buffer portion 500' may be adhered to one surface of the battery cell 100'. However, the present disclosure is not limited thereto, and the buffer portion 500' may be formed integrally with the molding portion 400' as the buffer portion 500' is formed by being additionally injected, *i.e.,* double-injected, into the insertion groove portion 400'h after the molding portion 400' has been injection molded.

The buffer portion 500' according to one or more embodiments of the present disclosure may include a buffer body 510'. The buffer body 510' may include a contact surface 510'a that may come into contact with the battery cell 100' and an inclined surface 510'b that is connected to the contact surface 510'a and is arranged at a pre-set angle with respect to the contact surface 510'a.

In the present specification, for convenience of description, an angle formed by the contact surface 510'a and the inclined surface 510'b of the buffer body 510' may be defined as an inclination angle θ.

Referring to FIG. 9, the inclination angle θ may be an acute angle, for example, in a range of 55° to 65°. The inclined surface 510'b may be arranged on opposite sides of the contact surface 510'a in a width direction of the battery cell 100'.

Because the inclined surfaces 510'b arranged on opposite sides of the contact surface 510'a are symmetrical, the inclination angle θ formed by the two inclined surfaces 510'b and the contact surface 510'a may be the same.

Referring to FIG. 9, a bottom surface of the buffer body 510' may be arranged on the other side of the buffer body 510' relative to the contact surface 510'a of the buffer body 510' that comes into contact with the battery cell 100', and may be connected to each of the inclined surfaces 510'b arranged on opposite sides of the contact surface 510'a.

A length d1 in a width direction of the contact surface 510'a may be relatively large compared to (*e.g*., may be greater than) a length d2 in a width direction of the bottom surface, and thus, a length of the buffer portion 500' may gradually decrease from an upper portion to a lower portion. For example, a cross section of the buffer portion 500' may have a trapezoidal shape.

Accordingly, if (*e.g*., when) the buffer portion 500' is inserted into the insertion groove portion 400'h, the inclined surface 510'b guides insertion, so that the buffer portion 500' may be easily inserted into the insertion groove portion 400'h. Also, a contact area between the insertion groove portion 400'h and the buffer portion 500' may increase due to the inclined surface 510'b, and thus, the buffer portion 500' may not easily fall out or be shaken out even with the application of external pressure and vibration.

Referring to FIG. 8, the insertion groove portion 400'h into which the buffer portion 500' may be inserted may be formed on one side of the molding portion 400'. The insertion groove portion 400'h may have a shape corresponding to a shape of the buffer portion 500'. Accordingly, one cross section of the insertion groove portion 400'h facing (*e.g*., opposite to) the buffer portion 500' may have a rectangular shape. A width of an inner circumference of the insertion groove portion 400'h may also have a shape that gradually decreases from the upper portion to the lower portion.

The buffer portion 500' according to one or more embodiments of the present disclosure includes the inclined surfaces 510'b on opposite sides for the molding portion 400'h to facilitate easy insertion, and is not easily separated by an external impact, and thus, an impact applied from the outside may be absorbed and the battery cell 100' may be stably protected.

The battery cell 100', protection circuit module 200', connecting portion, molding portion 400', and protecting portion of the battery pack 1' according to one or more embodiments of the present disclosure may each have the same configuration and/or effect as the battery cell 100, the protection circuit module 200, the connecting portion 300, the molding portion 400, and the protecting portion 600 of the battery pack 1 according to one or more embodiments of the present disclosure, respectively, except that the inclined surface 510'b is arranged on opposite sides of the buffer body 510', and thus, redundant detailed descriptions may not be provided.

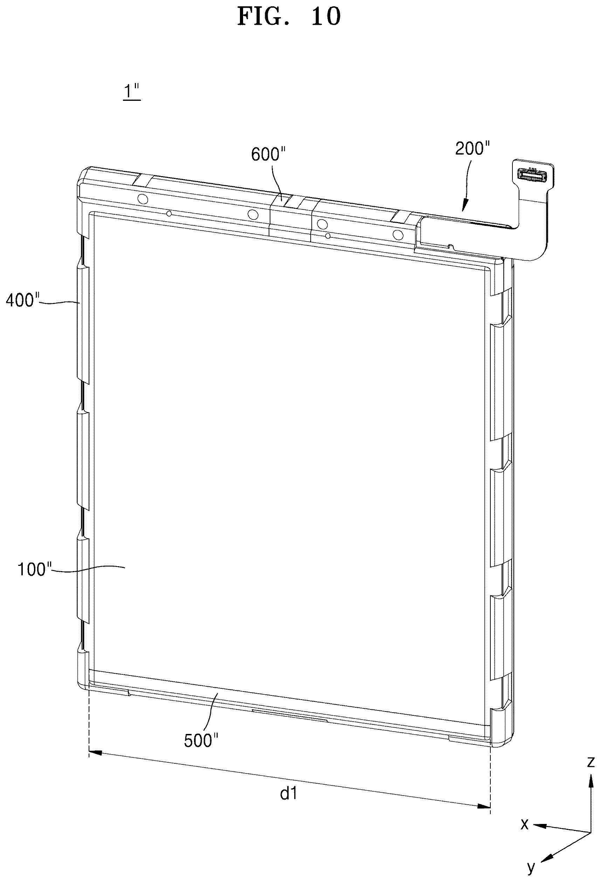

Hereinafter, the configuration, operating principles, and effects of a battery pack 1" according to one or more embodiments of the present disclosure will be described. FIG. 10 is a perspective view of the battery pack according to one or more embodiments of the present disclosure.

Referring to FIG. 10, the battery pack 1" may include a battery cell 100", a protection circuit module 200", a connecting portion, a molding portion 400", a buffer portion 500", and a protecting portion 600".

A configuration of the buffer portion 500" of the battery pack 1" is different from a configuration of the buffer portion 500 of the battery pack 1 according to one or more embodiments of the present disclosure, and thus, the buffer portion 500" will be mainly described in more detail below.

Referring to FIG. 10, a length of the buffer portion 500" may correspond to a width of the battery cell 100". Accordingly, one surface of the buffer portion 500" facing (*e.g*., opposite to) the battery cell 100" may be arranged to cover an entire lower surface of the battery cell 100".

For example, a contact area between the buffer portion 500" and the battery cell 100" may be equal to an area of the lower surface of the battery cell 100".

The buffer portion 500" may be arranged between the battery cell 100" and the molding portion 400". For example, the buffer portion 500" may be arranged between the molding portion 400" on the lower surface of the battery cell 100" and the lower surface of the battery cell 100", and the lower surface of the battery cell 100" may not be in contact with the molding portion 400".

The buffer portion 500" may include an elastically deformable material, for example, non-Newtonian polyurethane.

Accordingly, if (*e.g*., when) an impact is applied to a lower portion of the battery cell 100", the buffer portion 500" may be to absorb the impact to prevent or reduce the impact from being transmitted to the battery cell 100" and prevent or reduce damage to the battery cell 100".

The buffer portion 500" may have a pre-set thickness. For example, the buffer portion 500" may have a thickness of 0.2 mm to 0.4 mm. Here, the thickness of the buffer portion 500" may refer to a length of the buffer portion 500" extending along the third direction (*i.e.,* the z direction).

The buffer portion 500" may be formed by using any one of one or more suitable methods. For example, the buffer portion 500" may be formed integrally with the molding portion 400" through a double injection molding method. For example, if (*e.g*., when) the molding portion 400" is injection-molded for the battery cell 100", an empty space may be formed between the battery cell 100" and a lower portion of the molding portion 400".

Here, a length of the empty space along the third direction may be the same as the thickness of the buffer portion 500". After the molding portion 400" is formed, the buffer portion 500" in a flowable state may be injected into the empty space between the lower portion of the molding portion 400" and the battery cell 100". As the injected buffer portion 500" hardens, the molding portion 400" and the buffer portion 500" may be integrally coupled to each other.

However, the present disclosure is not limited thereto, and the buffer portion 500" may be formed separately from the molding portion 400" and then fitted between the battery cell 100" and the lower portion of the molding portion 400".

The buffer portion 500" according to one or more embodiments of the present disclosure may be arranged between the molding portion 400" and the battery cell 100" and may completely cover and protect the lower surface of the battery cell 100", thereby absorbing an impact applied to the lower portion if (*e.g*., when) the battery cell 100" is dropped and preventing or reducing physical damage.

The battery cell 100", protection circuit module 200", connecting portion, molding portion 400", and protecting portion 600" of the battery pack 1" according to one or more embodiments of the present disclosure may each have the same configuration and effect as the battery cell 100, the protection circuit module 200, the connecting portion 300, the molding portion 400, and the protecting portion 600 of the battery pack 1 according to one or more embodiments of the present disclosure, respectively, except that the buffer portion 500" is arranged between the battery cell 100" and the molding portion 400" and covers the entire lower surface of the battery cell 100". Therefore, redundant detailed descriptions may not be provided.

In a battery pack according to one or more embodiments of the present disclosure, a buffer portion and a protecting portion including an elastically deformable material may each be coupled to a molding portion and arranged at a center of a battery cell in a width direction, and thus, an impact applied from the outside may be absorbed and physical damage to the battery cell may be prevented or reduced. For example, this arrangement allows the buffer portion and the protecting portion to absorb impacts from the outside, thereby preventing or reducing physical damage to the battery cell.

Also, a reinforcing portion also made of (e.g., including) an elastically deformable material may be arranged on opposite sides of a connecting body, and thus, the battery cell may be protected such that a protection circuit module does not apply pressure to the battery cell or damage the battery cell. For example, this setup should ensure that the battery cell is protected from pressure or damage caused by the protection circuit module.

For example, the present disclosure describes a battery pack in which a buffer portion, including elastically deformable material, is coupled to a molding portion and arranged on one side of a battery cell to absorb impacts and prevent or reduce physical damage to the battery cell. For example, the present disclosure describes a battery pack that includes a buffer portion made of elastically deformable material. This buffer portion is attached to a molding portion and positioned on one side of the battery cell. Its purpose is to absorb impacts and prevent or reduce physical damage to the battery cell. Additionally, a reinforcing portion made of elastically deformable material is arranged on opposite sides of a connecting body to protect the battery cell from pressure or damage caused by the protection circuit module.

However, effects that are obtained through embodiments of the present disclosure are not limited to the effects described above, and other technical effects that not mentioned will be clearly understood by one of ordinary skill in the art from the description of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

Further, the use of "may" when describing embodiments of the present disclosure refers to "one or more embodiments of the present disclosure."

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

The battery pack, portable device, vehicle, and/or the battery, *e.g*., a battery controller, a battery manufacturing device, and/or any other relevant devices or components, according to embodiments of the present disclosure described herein may be implemented utilizing any suitable hardware, firmware (*e.g*., an applicationspecific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

A person of ordinary skill in the art, in view of the present disclosure in its entirety, would appreciate that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. It is to be understood that the foregoing is an illustration of various example embodiments and is not to be construed as limited to the specific embodiments disclosed herein, and that various modifications to the disclosed embodiments, as well as other example embodiments, are intended to be included within the scope of the present disclosure as defined in the appended claims, and their equivalents.

## Claims

1. A battery pack (1, 1', 1") comprising:
a battery cell (100, 100', 100") comprising an electrode assembly (110);
a molding portion (400, 400', 400") coupled to the battery cell (100, 100', 100") and around the battery cell (100, 100', 100");
a protection circuit module (200, 200', 200") extending along one side of the battery cell (100, 100', 100") in a width direction of the battery cell (100, 100', 100") and connected to the one side, the protection circuit module (200, 200', 200") being electrically connected to the electrode assembly (110); and
at least one of a buffer portion (500, 500', 500") and/or a protecting portion (600, 600', 600") coupled to the molding portion (400, 400', 400") and comprising elastically deformable material, the buffer portion (500, 500', 500") arranged at another side of the battery cell (100, 100', 100") opposite to the one side the protecting portion (600, 600', 600") disposed around the protection circuit module (200, 200', 200") .

2. The battery pack (1, 1', 1") of claim 1, wherein the buffer portion (500, 500', 500") is arranged at a center of the another side of the battery cell (100, 100', 100") along the width direction of the battery cell (100, 100', 100").

3. The battery pack (1, 1', 1") of claim 1 or 2, wherein the buffer portion (500, 500', 500") comprises a buffer body (510, 510') in contact with the battery cell (100, 100', 100") and a protrusion (511) protruding outward.

4. The battery pack (1, 1', 1") of any one of claims 1 to 3, wherein the molding portion (400, 400', 400") defines an insertion groove portion (400h) on one side of the molding portion (400, 400', 400"), the insertion groove portion (400h) being into which the buffer portion (500, 500', 500") is inserted.

5. The battery pack (1, 1', 1") of any one of claims 1 to 4, wherein the battery cell (100, 100', 100") further comprises an electrode tab portion (114) connected to the electrode assembly (110), the electrode tab portion (114) extending outward from the electrode assembly (110) and in contact with the protection circuit module (200, 200', 200").

6. The battery pack (1, 1', 1") of claim 5, wherein the electrode tab portion (114) comprises a first electrode tab (114b) and a second electrode tab (114a) spaced from the first electrode tab (114b), and the protecting portion (600, 600', 600") is arranged between the first electrode tab (114b) and the second electrode tab (114a).

7. The battery pack (1, 1', 1") of any one of claims 1 to 6, further comprising a connecting portion (300) between the battery cell (100, 100', 100") and the protection circuit module (200, 200', 200") and connecting the protection circuit module (200, 200', 200") and the battery cell (100, 100', 100") to each other.

8. The battery pack (1, 1', 1") of claim 7, wherein the connecting portion (300) comprises:
a connecting body (310) extending along the width direction of the battery cell (100, 100', 100") and in contact with the battery cell (100, 100', 100"); and
a reinforcing portion (330) on one side of the connecting body (310) facing the protection circuit module (200, 200', 200").

9. The battery pack (1, 1', 1") of claim 8, wherein the reinforcing portion (330) comprises an elastically deformable material.

10. The battery pack (1, 1', 1") of claim 9, wherein the reinforcing portion (330) is provided as a plurality of reinforcing portions (330) and a respective one of the plurality of reinforcing portion (330) is arranged on each of opposite end portions (400'h) of the connecting body (310).

11. The battery pack (1, 1', 1") of claim 9 or 10, wherein the reinforcing portion (330) comprises a non-Newtonian material.

12. The battery pack (1, 1', 1") of any one of claims 1 to 11, wherein the buffer portion (500, 500', 500") comprises a non-Newtonian material, and/or wherein the protecting portion (600, 600', 600") comprises a non-Newtonian material.

13. The battery pack (1, 1', 1") of any one of claims 1 to 12, wherein the battery pack (1, 1', 1") comprises the buffer portion (500, 500', 500") coupled to the molding portion (400, 400', 400") comprising the elastically deformable material and arranged at the another side of the battery cell (100, 100', 100") opposite to the one side.

14. The battery pack (1, 1', 1") of any one of claims 1 to 12, wherein the battery pack (1, 1', 1") comprises the protecting portion (600, 600', 600") around the protection circuit module, coupled to the molding portion, and comprising the elastically deformable material.

15. The battery pack (1, 1', 1") of any one of claims 1 to 12, wherein the battery pack (1, 1', 1") comprises both the buffer portion (500, 500', 500") coupled to the molding portion (400, 400', 400") comprising the elastically deformable material and arranged at the another side of the battery cell (100, 100', 100") opposite to the one side and the protecting portion (600, 600', 600") around the protection circuit module, coupled to the molding portion, and comprising the elastically deformable material.
